# EUROPEAN PATENT APPLICATION

(11) **EP 4 478 157 A1**
(43) Date of publication of application: **18.12.2024**
(21) Application number: 23179163.3
(22) Date of filing: 14.06.2023
(51) Int. Cl.: G06F 3/01, B60W 40/08, G06N 3/02

(54) **GESTURE RECOGNITION SYSTEM AND METHOD FOR GESTURE RECOGNITION**

(71) Applicant: Bayerische Motoren Werke Aktiengesellschaft, 80809 München (DE)
(72) Inventor: Germiniasi da Silveira, Dennis Brown, 80636 München (DE)

(57) **Abstract**

Provided is a gesture recognition system (1) comprising a mobile device (10) holdable or held in a hand of a user, the mobile device (10) having at least one sensor (12) for detecting motion data and a first control device (11), and at least one second control device (20) for controlling at least one application. The first control device (11) is configured to obtain (S1) motion data detected by the at least one sensor (12), determine (S2) a gesture of the user based on the obtained motion data using artificial intelligence, and notify (S3) the at least one second control device (20) of the determined gesture. The at least one second control device (20) is configured to determine a control command for the at least one application depending on the determined gesture (S4), and to output the determined control command to the at least one application (S5).

## Description

The present disclosure relates to a gesture recognition system, a motor vehicle comprising the gesture recognition system, and/or a method for gesture recognition. Additionally, or alternatively, there is provided a computer program comprising instructions that, when the program is executed by a computer, cause the computer to at least partially execute the method. Additionally, or alternatively, there is provided a computer-readable medium comprising instructions that, when a computer executes the instructions, cause the computer to at least partially execute the method.

Known systems use gestures to control certain applications. Typically, these systems use cameras to recognize the gestures, with a mapping between the respective recognized gesture and one or more functions or applications to be executed when the gesture is recognized.

In motor vehicles, e.g., there is a camera (e.g., in the rearview mirror) that tracks hand movements in front of a screen. Example functions include pointing a finger at the screen and spinning it in a circle to adjust the volume of the speakers, or pointing two fingers at the screen to turn the speakers on or off. Beyond that, numerous other gestures and use cases are known or can be implemented.

Another way to detect gestures is to detect the movement of a controller or handheld/mobile device.

These systems, which primarily use cameras and/or computer vision for gesture recognition, may limit their use for certain use cases, such as when a mobile device, such as a smartphone, is used as a controller or when visibility is poor.

US 2022/0129081 A1 describes a gesture recognition device including a sensor unit having at least one sensor and a controller connected to the sensor unit. The controller is operable in a training mode and a trained mode.

US 2017/0228027 A1 describes a method for controlling an electronic equipment comprising detecting an inertia signal. A gesture is obtained by dividing the inertia signal or by classifying the inertia signal. A control command is outputted based on the gesture to control the electronic device.

KR 2019/0102915 A describes a gesture recognition system comprising a glove-like wearable device having one or more inertial measurement units for determining data on a hand gesture and a controller for providing gesture data including the determined data, and a computing unit provided to implement learning and classification mechanisms based on a convolutional neural network for recognizing the hand gesture using the gesture data.

US 2012/081276 A1 describes a system for recognizing gestures on a mobile device. The sensor data includes a force or impulse. The force or impulse is applied to the simulated physical object, and the state of the simulated physical object is then observed. Input is provided to an application based at least on the observed state of the simulated physical object.

EP 2 920 673 A1 describes a method of operating a device comprising buffering sensor information from an environment of the device as buffered sensor information, detecting a gaze of a person in the environment, initiating a recognition of some sensor information including the buffered sensor information, the recognition determining at least one instruction in the sensor information, and operating the device based on the at least one instruction.

US 2022/391697 A1 describes a gesture recognition method using machine learning based on sensor data indicating a gesture performed by a user, wherein the sensor data is acquired by at least one sensor of a wearable device.

In view of the prior art, the object of the present disclosure is to provide a device and/or method, each of which is suitable for enriching the prior art.

The object is solved by the features of the independent claims. The further independent claims and the dependent claims each comprise optional embodiments of the disclosure.

Accordingly, the object is solved by a gesture recognition system.

The gesture recognition system comprises a mobile device that is holdable or held in a hand of a user. The mobile device comprises at least one sensor for detecting motion data. The mobile device comprises a first control device. The first control device may also be referred to as a master control device.

The gesture recognition system comprises at least one second control device for controlling at least one application (and/or functions of at least one application). The at least one second control device may also be referred to as at least one slave control device.

The first control device is configured to obtain motion data that has been detected by the at least one sensor.

The first control device is configured to determine a gesture of the user using artificial intelligence based on the obtained motion data; and

The first control device is configured to notify the at least one second control device of the detected gesture.

The at least one second control device is configured to determine a control command for the at least one application depending on the determined gesture.

The at least one second control device is configured to output the determined control command to the at least one application.

Each of the first control device and the at least one second control device may be configured for electronic data processing and/or may be designed as an electronic data processing device, which may comprise, e.g., one or more microprocessors and data memories.

For example, the first control device may be configured to execute software and/or at least one algorithm for processing and analyzing the motion data (or sensor signals and/or data) and/or for executing the artificial intelligence or artificial intelligence models.

For example, the at least one second control device may be configured to execute software and/or at least one algorithm for further processing the determined gesture to determine the control command.

The at least one second control device may be part of or represent the driving assistance system. The at least one second control device may, e.g., be an electronic control unit (ECU). The electronic control unit may be an intelligent processor-controlled unit which may communicate with other modules, e.g., via a central gateway (CGW), and which may, if necessary, form the vehicle electrical system via field buses such as the CAN bus, LIN bus, MOST bus, FlexRay and/or via the automotive Ethernet, e.g., together with telematics control units and/or an environment sensor system.

It is conceivable that the at least one second control device is configured to control functions relevant to the driving behavior of the motor vehicle, such as the steering, the engine control, the power transmission, and/or the braking system. In addition, driver assistance systems, such as a parking assistant, adaptive cruise control (ACC), a lane departure warning system, a lane change assistant, a traffic sign recognition system, a light signal recognition system, a start-up assistant, a night vision assistant, and/or an intersection assistant, may be controlled by the at least one second control device.

The artificial intelligence may comprise at least one artificial intelligence model or machine learning model, e.g., at least one neural network. Each model may comprise algorithms to automatically find patterns and correlations in data as input parameters and to make predictions, e.g., for gesture recognition, based on this analysis. For this purpose, the models may be individually trained using training data, rather than explicitly programmed for a specific purpose.

The motion data may include motion data related to at least one motion of the hand in which the user is holding the mobile device (e.g., during a use of the gesture recognition system). The at least one movement may include, e.g., a pointing movement (e.g., towards one of the at least one application), a swivel movement, and/or a rotating movement of the hand (and/or a combination thereof).

The gesture recognition system described above provides a number of advantages. Among other things, a technique is presented that provides a clear separation of duties between the first control device in the mobile device and the at least one second control device, making the gesture recognition system, among other things, easier to develop or manufacture and easier to extend for additional functions and applications.

Thus, in the context of gesture recognition, the first control device is used exclusively for detecting movements and determining gestures on the basis of the detected movements, whereby the type or number of determinable gestures can be expanded, e.g., by appropriate training of the artificial intelligence. The at least one second control device does not perform any tasks for determining gestures, but serves, in the context of gesture recognition, exclusively for controlling applications depending on gestures determined by means of the first control device. Accordingly, the at least one second control device can be extended for further functions of an application or for further applications. Furthermore, further second control devices can be integrated into the gesture recognition system.

Compared to the known camera-based systems, the present gesture recognition system has the further advantage of being functional even in poor lighting conditions or even when the view (between the user and an application) is obstructed. In addition, the gesture recognition system can be implemented and operated independently of the application.

Possible further embodiments of the device described above are explained in detail below.

The first control device may not be configured to determine the control command and output the determined control command to the at least one application. In other words, the first control device may be excluded from determining the control command and outputting the determined control command to the at least one application.

The at least one second control device may not be configured to obtain the motion data and/or determine the gesture of the user. In other words, the at least one second control device may be excluded from obtaining the motion data and/or determining the gesture of the user.

The at least one second control device may be installable or installed in a motor vehicle.

The gesture recognition system may comprise a motor vehicle in which the at least one second control device is installed.

The at least one application may be designed as a vehicle application in each case.

The artificial intelligence may comprise at least one neural network that may be trained to determine the gesture of the user with the obtained motion data as input parameters.

The first control device may be configured to train the at least one neural network to extend further recognizable (and/or determinable) gestures.

The at least one second control device may be configured to determine the control command by associating the determined gesture and the control command based on predetermined (or stored) associations between control commands and gestures.

The first control device may be configured to notify the at least one second control device of the determined gesture via a programming interface.

The first control device and the at least one second control device may communicate (and/or may be communicable) with each other via Bluetooth, TCP/IP (Transmission Control Protocol/Internet Protocol), and/or SOME/IP (Scalable Service-Oriented Middleware over IP).

The at least one sensor may include an accelerometer, a position sensor, and/or a gyro sensor.

The mobile device may be a mobile communication unit and/or a smartphone.

The gesture recognition system may be cameraless.

The gesture recognition system may be expandable to include one or more additional second control devices.

The above may be summarized in other words and to a possible more specific embodiment of the disclosure as described below, and the following description is to be construed as not being limiting to the disclosure.

According to the present disclosure, an Accelerometer and Gyroscopic Based Gesture Detection Interface Framework (AGGDIF) may define a Human Machine Interface (HMI) that may enable a slave device to be notified when a known gesture is detected by a master device. For example, the master device may use a set of accelerometers and gyro sensors to process gesture recognition. The gestures may consist of defined spatial motions. The gesture data set may be expanded to include a variety of desired spatial gestures.

For example, the present disclosure may comprise a master software running on a master computer or device (e.g., a smartphone) that comprises accelerometers and/or gyro sensors. The master device may be configured for detecting an extensible set of known spatial gestures according to the motion movements detected by the sensors. Once a given gesture is detected, the master device may inform all listening slave devices of the occurrence of such an event. The handling of a detected gesture is not specified by the master device, instead this task may be the responsibility of the slave software running on a slave computer or device.

For example, the slave device may implement the handling for a series of gestures to provide input as a human interface device (HID) mouse to move the mouse pointer on the screen of, e.g., the slave device according to movements detected by the master device (e.g., a smartphone).

The master software may comprise an artificial neural network trained with a predetermined data set of desired gestures, and may provide defined gesture APIs to communicate the occurrence of each gesture to the slave devices. The communication interface between the master and slave may be implemented using Bluetooth, TCP/IP, and/or SOME/IP.

Further provided is a motor vehicle comprising the gesture recognition system described above and/or having the at least one second control device installed in the motor vehicle.

The motor vehicle may comprise at least one display and/or touchscreen. The motor vehicle may comprise at least one speaker.

The motor vehicle may comprise an infotainment system and/or home theater system. The display, the touchscreen and/or the at least one speaker may be part of the infotainment system and/or home theater system.

The at least one application may comprise at least one application or function of the infotainment system and/or home theater system. The control of the at least one application may comprise, e.g., controlling and/or selecting a menu and/or a function on the screen and/or controlling a volume (of the at least one speaker).

The motor vehicle may be a passenger car, in particular an automobile, or a commercial vehicle, such as a truck.

The motor vehicle may be automated and/or autonomous. The motor vehicle may be designed to take over longitudinal guidance and/or lateral guidance during automated driving of the motor vehicle at least partially and/or at least temporarily by means of the at least one second control device.

Automated driving may be performed in such a way that driving the motor vehicle is (largely) autonomous. The automated driving may be controlled at least partially and/or temporarily by the at least one second control device.

It is conceivable that the motor vehicle intervenes in the transverse guidance of the motor vehicle actively, e.g., by adjusting an actual steering wheel position, and optionally passively, e.g., by displaying a turn-off indication, by means of a driving assistance system.

The motor vehicle may include at least one driver assistance system controllable by the at least one second control device.

The at least one application may comprise the at least one driver assistance system or functions of the at least one driver assistance system. Controlling the at least one application may comprise, e.g., controlling the at least one driver assistance system.

What has been described above with reference to the gesture recognition system applies analogously to the motor vehicle and vice versa.

Furthermore, a method for gesture recognition is provided. The method may be performable or performed by the first control device described above and the at least one second control device described above (or by the gesture recognition system).

The method comprises obtaining motion data detected by at least one sensor of a mobile device by a first control device of the mobile device.

The method comprises determining, by the first control device, a gesture of the user based on the obtained motion data using artificial intelligence.

The method comprises notifying, by the first control device, at least one second control device of the detected gesture.

The method comprises determining, by the at least one second control device, a control command for at least one application depending on the determined gesture.

The method comprises outputting, by the at least one second control device, the determined control command to the at least one application.

What has been described above with reference to the gesture recognition system and motor vehicle also applies analogously to the method and vice versa.

The method may be a computer-implemented method, i.e., one, more, or all steps of the method may be performed at least in part by a computer or device for data processing, optionally. the first control device and the at least one second control device (or the gesture recognition system).

What has been described above with reference to the gesture recognition system and the motor vehicle applies analogously to the method and vice versa.

Further provided is a computer program comprising instructions which, when the program is executed by a computer, cause the computer to at least partially execute the method described above.

A program code of the computer program may be in any code, especially in a code suitable for control systems of motor vehicles.

What has been described above with reference to the gesture recognition system, the motor vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described above.

That is, a computer-readable medium comprising a computer program as defined above may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the motor vehicle, but may also be obtained externally via the Internet or otherwise.

What has been described above with reference to the method, the gesture recognition system, the computer program and the motor vehicle applies analogously to the computer-readable medium and vice versa.

An optional embodiment is described below with reference to Figures 1, 2 and 3.
- Fig. 1: shows schematically a gesture recognition system according to the disclosure;
- Fig. 2: shows schematically a motor vehicle with the gesture recognition system; and
- Fig. 3: shows schematically a flowchart of a gesture recognition method according to the disclosure.

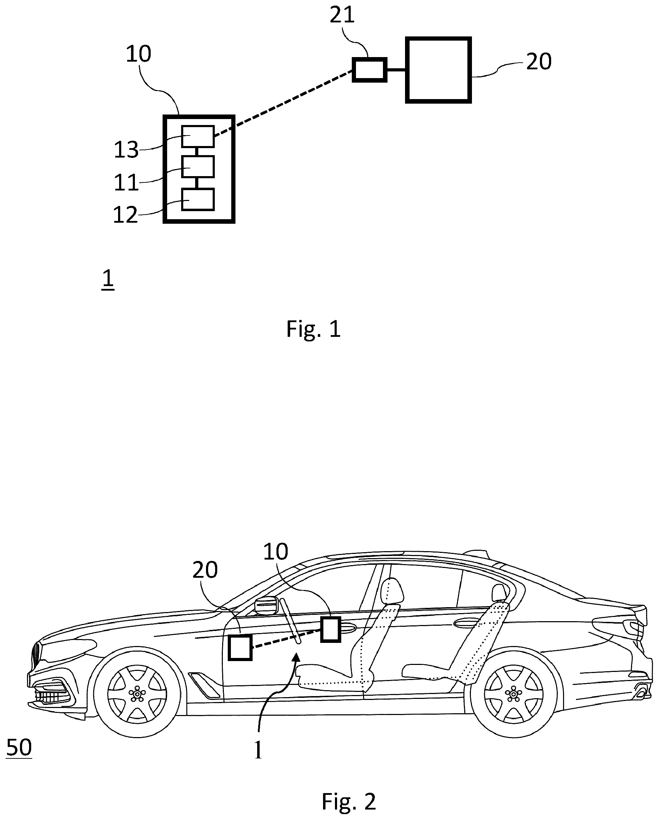

Figure 1 shows only schematically the gesture recognition system 1 comprising a mobile device 10 holdable or held in a hand of a user, and a second control device 20 for controlling at least one application, e.g., at least one vehicle application. It is conceivable that the gesture recognition system 1 may also comprise, among other things, a plurality of second control devices 20.

The mobile device 10, e.g., a smartphone, comprises at least one sensor 12 for detecting motion data (of the hand of the user) and a first control device 11. The at least one sensor 12 may comprise an accelerometer, a position sensor, and/or a gyro sensor.

The first control device 11 and the at least one second control device 20 may exchange signals and/or data via a programming interface or may communicate with each other, e.g., via Bluetooth, TCP/IP and/or SOME/IP. For this purpose, the mobile device 10 may comprise a (first) communication interface 10 and the at least one second control device 20 may be connected to or comprise a (second) communication interface 21.

The at least one second control device 20 may be installable in or be part of a motor vehicle 50.

The mobile device 10 may be implemented as a separate component to the motor vehicle 50, e.g., a smartphone.

Alternatively, it is also conceivable that the motor vehicle 50 comprises the gesture recognition system 1, as shown schematically in Figure 2.

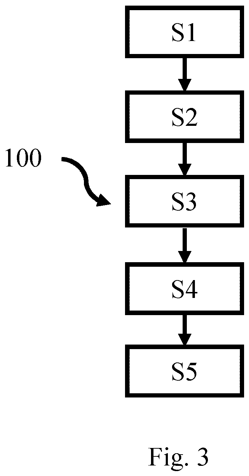

For gesture recognition, the gesture recognition system 1 is configured to perform the method 100 described in detail below also with reference to Figure 3.

In a first method step S1, motion data detected by the at least one sensor 12 of the mobile device 10 is obtained by the first control device 11.

In a second method step S2, a gesture of the user is determined by means of artificial intelligence based on the obtained motion data by the first control device 11.

The artificial intelligence may comprise at least one neural network trained to determine the gesture of the user with the obtained motion data as input parameters. The at least one neural network may be trained to extend further recognizable gestures by the first control device 11.

In a third method step S3, the at least one second control device 20 is notified of the detected gesture by the first control device 11, e.g., by means of the programming interface.

In a fourth method step S4, a control command for the at least one application is determined by the at least one second control device 20 as a function of the determined gesture. For this purpose, e.g., the determined gesture and the control command may be associated with each other based on predetermined associations between control commands and gestures.

In a fifth method step S5, the determined control command is output to the at least one application, e.g., a vehicle application, by the at least one second control device 20.

### List of reference signs

- 1: gesture recognition system
- 10: mobile device
- 11: first control device
- 12: sensor
- 13: communication interface of the mobile device
- 20: second control device
- 21: communication interface of the second control device
- 50: motor vehicle

- 100: method
- S1-S5: method steps

## Claims

1. Gesture recognition system (1), comprising:
- a mobile device (10) that is holdable or held in a hand of a user, the mobile device (10) comprising at least one sensor (12) for detecting motion data and a first control device (11); and
- at least one second control device (20) for controlling at least one application;
**characterized in that**
- the first control device (11) is configured to:
- obtain (S1) motion data that has been detected by the at least one sensor (12);
- determine a gesture of the user based on the obtained motion data using artificial intelligence (S2); and
- notify (S3) the at least one second control device (20) of the detected gesture; and
- the at least one second control device (20) is configured to:
- determine (S4) a control command for the at least one application depending on the determined gesture; and
- output the determined control command to the at least one application (S5).

2. Gesture recognition system (1) according to claim 1, **characterized in that**
- the at least one second control device (20) is installable or is installed in a motor vehicle (50); and/or
- the at least one application is designed as a vehicle application, respectively.

3. Gesture recognition system (1) according to claim 1 or 2, **characterized in that** the artificial intelligence comprises at least one neural network trained to determine the gesture of the user with the obtained motion data as input parameters.

4. Gesture recognition system (1) according to claim 3, **characterized in that** the first control device (11) is configured to:
- train the at least one neural network to add further recognizable gestures.

5. Gesture recognition system (1) according to any one of the preceding claims, **characterized in that** the at least one second control device (20) is configured to determine (S4) the control command by:
- associating the detected gesture and the control command with each other based on predetermined associations between control commands and gestures.

6. Gesture recognition system (1) according to any one of the preceding claims, **characterized in that**
- the first control device (11) is configured to notify (S3) the at least one second control device (20) of the determined gesture by means of a programming interface; and/or
- the first control device (11) and the at least one second control device (20) can communicate with each other via Bluetooth, TCP/IP and/or SOME/IP.

7. Gesture recognition system (1) according to any one of the preceding claims, **characterized in that**
- the at least one sensor (12) comprises an acceleration sensor, a position sensor and/or a gyro sensor; and/or
- the mobile device (10) is a mobile communication unit and/or a smartphone.

8. Motor vehicle (50), **characterized in that** the motor vehicle (50) comprises the gesture recognition system (1) according to any one of the preceding claims.

9. Method (100) for gesture recognition, **characterized in that** the method (100) comprises:
- obtaining (S1), by a first control device (11) of a mobile device (10), motion data detected by at least one sensor (12) of the mobile device (10);
- determining (S2), by the first control device (11), a gesture of a user based on the obtained motion data using artificial intelligence;
- notifying (S3), by the first control device (11), at least one second control device (20) of the detected gesture;
- determining (S4), by the at least one second control device (20), a control command for at least one application depending on the determined gesture; and
- outputting (S5), by the at least one second control device (20), the determined control command to the at least one application.

10. Computer program and/or computer-readable medium, **characterized in that** the computer program and/or computer-readable medium comprises instructions that, when the instructions are executed by a computer, cause the computer to execute the method (100) according to claim 9.
